# EUROPÄISCHE PATENTSCHRIFT

(11) **EP 4 363 815 B1**
(45) Veröffentlichungstag und Bekanntmachung des Hinweises auf die Patenterteilung: **02.12.2026**
(21) Anmeldenummer: 22733080.0
(22) Anmeldetag: 14.06.2022
(51) Int. Cl.: G01J 5/00, G01J 5/0806, G08B 13/191, G08B 13/193, G01J 5/34

(54) **OPTISCHES ELEMENT FÜR EINEN BEWEGUNGSMELDER**
OPTICAL ELEMENT FOR A MOTION DETECTOR
ÉLÉMENT OPTIQUE POUR DÉTECTEUR DE MOUVEMENT

(30) Priorität: 30.06.2021 DE 102021116867
(43) Veröffentlichungstag der Anmeldung: 08.05.2024
(73) Patentinhaber: Steinel GmbH, 33442 Herzebrock-Clarholz (DE)
(72) Erfinder: SEHLHOFF, Stefan, 33442 Herzebrock-Clarholz (DE); BORN, Torsten, 33813 Oerlinghausen (DE)
(74) Vertreter: Mathys & Squire
(86) Internationale Anmeldenummer: PCT/EP2022/066107
(87) Internationale Veröffentlichungsnummer: WO 2023/274710

(56) Entgegenhaltungen:
- EP-A1- 0 666 551
- EP-A1- 2 246 828
- EP-A1- 3 828 600
- DE-B3- 102006 016 395
- US-A- 5 311 024
- US-A- 5 442 178
- US-A1- 2013 284 932
- US-A1- 2016 369 991

## Beschreibung

Die vorliegende Erfindung betrifft ein optisches Element für einen Infrarotbewegungsmelder und einen Infrarotbewegungsmelder.

Infrarotsensoren (IR-Sensoren) werden in einer Vielzahl von Anwendungen als Bewegungsmelder eingesetzt. Das Wirkprinzip von IR-Sensoren ist es, die von einem sich im Sichtfeld des Sensors befindlichen Objekt abgestrahlte Wärme in Form von Infrarotstrahlung zu detektieren. Insbesondere die Veränderung der empfangenen Strahlung kann detektiert werden, wodurch die Erfassung von Bewegungen möglich wird.

Häufig als IR-Sensoren verwendete pyroelektrische Sensoren weisen dazu zwei Sensorflächen auf, welche die einfallende Infrarot-Strahlung detektieren können. Vermittelt durch ein entsprechendes optisches Element erfassen diese Sensorflächen die IR-Strahlung von benachbarten Raumgebieten. Einer Differenz der beiden Signale der Sensorflächen entspricht hierbei eine Differenz der Temperatur der benachbarten Raumgebiete. Bewegt sich ein Objekt durch diese Raumgebiete, ändern sich der Temperaturunterschied und damit das gemessene Differenzsignal. Auf diese Weise kann ein pyroelektrischer Sensor Bewegungen erfassen.

Aufgrund dieses Funktionsprinzips besteht das grundsätzliche Problem, dass Wärmequellen, wie z.B. Personen oder Tiere, die sich tangential an einem IR-Sensor vorbeibewegen, bereits in größerer Entfernung erkannt werden können, als dies der Fall ist, wenn die Bewegung radial erfolgt, d.h. auf den Sensor zu oder von diesem weg. Beim Aufbau des Bewegungsmelders ist daher stets die unterschiedliche Reichweite des Bewegungsmelders bezüglich radialer und tangentialer Bewegung zu beachten, was einen die erwünschte Erfassungscharakteristik wiedergebenden Aufbau erschwert.

Optische Elemente, welche Infrarotstrahlung auf einen Infrarotsensor leiten, sind z.B. aus EP 0 666 551 A1, US 5 442 178 A, US 5 311 024 A und DE 10 2006 016395 B3 bekannt.

Aufgabe der Erfindung ist daher IR-Bewegungsmelder zu ermöglichen, die zumindest in einer Richtung eine radiale Detektionsreichweite aufweisen, die der tangentialen Detektionsreichweite entspricht. Insbesondere ist Aufgabe der Erfindung, ein optisches Element für einen IR-Bewegungsmelder anzugeben, das ermöglicht die Detektionsreichweiten zumindest in einer Richtung anzugleichen.

Diese Aufgabe wird durch den Gegenstand des Anspruchs 1 gelöst.

Das beanspruchte optische Element weist einen ersten Bereich auf, in dem eine Mehrzahl von ersten Linsen mit einer Apertur aus einem ersten Aperturbereich und einer Brennweite aus einem ersten Brennweitenbereich angeordnet ist, und einen zweiten Bereich, der innerhalb des ersten Bereichs liegt und zumindest eine zweite Linse mit einer Apertur aus einem zweiten Aperturbereich mit Werten, die größer sind als die Werte des ersten Aperturbereichs, und mit einer Brennweite aus einem zweiten Brennweitenbereich mit Werten aufweist, die größer sind als die Werte des ersten Brennweitenbereichs.

Es wird also ein optisches Element vorgeschlagen, das aus verschiedenen Bereichen oder Segmenten mit unterschiedlichen optischen Eigenschaften bezüglich der Ablenkung von Infrarotstrahlung besteht. Ein erster Bereich besteht aus üblicher Weise verwendeten Linsen, die geeignet sind, Infrarotstrahlung in herkömmlicher Weise auf einen oder mehrere hinter dem optischen Element angeordnete IR-Sensoren zu fokussieren. Ein in den ersten Bereich eingebetteter zweiter Bereich besteht aus einer oder mehreren Linsen die eine größere Apertur und eine größere Brennweite aufweisen, als diese Standardlinsen.

Weist eine Linse des zweiten Bereichs eine größere Apertur auf als die Standardlinsen, so gelangt durch diese Linse mehr IR-Strahlung auf den IR-Sensor als dies bei einer Standardlinse der Fall wäre. Dadurch erhöht sich die Strahlungsintensität auf dem IR-Sensor. Dies hat eine größere Signalstärke zur Folge, die erlaubt, die kleineren Strahlungsintensitätsänderungen zu detektieren, die bei einer radialen Annäherung auftreten. Dadurch erhöht sich die Sensitivität bezüglich radialer Bewegungen, was gegenüber den Standardlinsen eine Vergrößerung der Erfassungsreichweite für radiale Bewegungen zur Folge hat. Auf diese Weise kann für IR-Strahlung, die durch den zweiten Bereich einfällt, eine radiale Erfassungsreichweite erzielt werden, die der tangentialen Erfassungsreichweite für durch die Standardlinsen einfallende IR-Strahlung entspricht bzw. gleicht.

Zusätzlich ist auch die Brennweite der Linsen im zweiten Bereich im Vergleich zu den Standardlinsen größer. Dies resultiert in einer höheren Auflösung der durch den zweiten Bereich wahrgenommenen IR-Strahlung. Es ist damit also möglich, Temperaturänderungen in kleineren Raumbereichen wahrzunehmen. Dies erlaubt es insbesondere die Beine einer sich radial auf das optische Element zu bewegenden Person zu unterscheiden. Eine Bewegung der Beine führt dann auch in größerer Entfernung zur Bewegungsdetektion. Damit lässt sich auch über eine größere Brennweite eine erhöhte radiale Erfassungsreichweite erreichen, die der tangentialen Erfassungsreichweite im Bereich der niederauflösenden Standardlinsen entspricht.

Die zumindest eine zweite Linse ragt in Einfallsrichtung der auf den Infrarotsensor zu leitenden Infrarotstrahlung aus einer durch die ersten Linsen definierten Oberfläche heraus.

Durch Herausstellen der zweiten Linsen aus der (gegebenenfalls gekrümmten) durch die ersten Linsen erzeugten Fläche kann der Abstand der zweiten Linse zu einem innerhalb des optischen Elements liegenden Infrarotsensor gegenüber dem Abstand des Infrarotsensors zu den ersten Linsen erhöht werden. Dies erlaubt es dann, die Brennweite der zweiten Linsen zu erhöhen.

Die zumindest eine zweite Linse kann eine Fresnel-Linse sein und die ersten Linsen sphärische Linsen. Fresnel-Linsen bieten den Vorteil einer gegenüber sphärischen Linsen gleicher Apertur sehr flachen Bauweise. Zudem weisen Fresnel-Linsen im Vergleich weniger Material und damit weniger Gewicht und weniger optische Absorption auf als sphärische Linsen gleicher Apertur. Damit eignen sich Fresnel-Linsen besonders, eine erhöhte Strahlungsintensität auf den Infrarotsensor zu leiten, ohne die IR-Strahlung übermäßig zu dämpfen, das Gewicht des optischen Elements übermäßig zu erhöhen oder die Stabilität des optischen Elements zu beeinträchtigen. Die ersten Linsen können hingegen wegen ihrer vergleichsweise kleinen Apertur als sphärische Linsen ausgebildet werden, z.B. in Form einer Multilinse, in die die Fresnel-Linse(n) eingelassen sind. Dies erlaubt es, den ersten Bereich in einer Größe auszugestalten, die erlaubt, einen weiten Sichtbereich zu definieren, z.B. eine Rundumsicht oder eine Sichtwinkel von 270° oder dergleichen.

Das optische Element kann die Form einer Teilsphäre aufweisen, vorzugsweise einer Halbsphäre. Damit lassen sich bei entsprechender Ausrichtung von in dem optischen Element angeordneten IR-Sensoren und einer Installation im Deckenbereich Bewegungen in allen Richtungen detektieren. Der zweite Bereich kann hierbei eine im Wesentlichen rechteckige Fläche aufweisen. Der zweite Bereich ist dann als eine Art "Sichtfenster" mit erhöhter radialer Erfassungsreichweite ausgebildet. Die erhöhte radiale Erfassungsreichweite wird damit also auf ein bestimmtes Raumwinkelsegment festgelegt, das durch die Ausgestaltung des zweiten Bereichs auch von außen sichtbar ist. Hierdurch wird die Ausrichtung eines das optische Element verwendenden Bewegungsmelders vereinfacht. Die Form des optischen Elements kann aber auch irregulär sein oder nur den Teil einer Kugel oder eines Ellipsoids darstellen. Ebenso kann der zweite Bereich nach Bedarf beliebig geformt sein.

Eine Vorrichtung zur Erfassung von Bewegungen, das heißt ein Bewegungsmelder, kann das oben beschriebene optische Element und zumindest einen Infrarotsensor zur Erfassung von Bewegungen aufweisen, auf den das optische Element Infrarotstrahlung leitet. Damit lässt sich ein Bewegungsmelder realisieren, der zumindest im durch den zweiten Bereich definierten Erfassungsbereich eine der tangentialen Erfassungsreichweite angepasste radiale Erfassungsreichweite hat.

Die Vorrichtung kann eine Mehrzahl von Infrarotsensoren zur Erfassung von Bewegungen aufweisen, wobei die Mehrzahl von Infrarotsensoren erste Infrarotsensoren aufweist, auf die Infrarotstrahlung nur durch einen Teil der ersten Linsen geleitet wird, und die Mehrzahl von Infrarotsensoren zumindest einen zweiten Infrarotsensor aufweist, auf den Infrarotstrahlung durch einen Teil der ersten Linsen und die zumindest eine zweite Linse geleitet wird. Damit kann erreicht werden, dass die Erfassungsreichweite für tangentiale Bewegungen, die von den ersten Infrarotsensoren erfasst werden, der Erfassungsreichweite für radiale Bewegungen angeglichen wird, die durch den zumindest einen zweiten Infrarotsensor erfasst werden. Dies erlaubt eine Ausrichtung der zweiten Linse des Bewegungsmelders auf Bereiche, mit einer erhöhten Anzahl von zu erwartenden radialen Bewegungen, wie z.B. auf Zuwege oder Durchgänge, während die ersten Infrarotsensoren über die ersten Linsen die Peripherie überwachen. Die ersten und zweiten Infrarotsensoren können hierzu auch baugleich sein, d.h. die Angleichung der radialen Erfassungsreichweite resultiert aus der Ausgestaltung des optischen Elements und gegebenenfalls der Anordnung der IR-Sensoren.

So kann der minimale Abstand des zumindest einen zweiten Infrarotsensors von der zumindest einen zweiten Linse größer sein als minimale Abstände der ersten Infrarotsensoren zu den ersten Linsen. Der zweite IR-Sensor ist also weiter von der zweiten Linse entfernt als es die ersten IR-Sensoren von den zugeordneten ersten Linsen sind. Dies erlaubt es, die Brennweite der zweiten Linse(n) zu erhöhen, um die über den zweiten IR-Sensor erreichbare Auflösung zu erhöhen.

Wenn eine zentrale Sichtlinie des zumindest einen zweiten Infrarotsensors einen Winkel von 0° definiert, kann ein Erfassungsbereich des zumindest einen zweiten Infrarotsensors innerhalb eines Winkelbereichs von -20° bis +20° liegen und die ersten Infrarotsensoren Erfassungsbereiche aufweisen, die zumindest teilweise außerhalb des Erfassungsbereichs des zumindest einen zweiten Infrarotsensors liegen. Der zweite IR-Sensor ist also (in der Horizontalebene) auf ein bestimmtes Winkelsegment fokussiert, in dem die radiale Erfassungsreichweite durch das optische Element erhöht ist. Die übrigen IR-Sensoren können die übrigen Winkelbereiche des Bewegungsmelders überwachen, z.B. die Winkel von -180° bis -20° und von 20° bis 180° für einen Bewegungsmelder mit Rundumsicht. Dieses Winkelsegment ist durch die Anordnung der zweiten Linse(n) von außen leicht erkennbar, so dass der Bewegungsmelder leicht ausgerichtet werden kann.

Der zumindest eine zweite Infrarotsensor kann bei bestimmungsgemäßer Montage der Vorrichtung einen schräg nach unten gerichteten Blickwinkel haben. Die Sichtachse des zweiten IR-Sensors kann z.B. um etwa 5° bis 25° gegen die Horizontale geneigt sein, wenn der Bewegungsmelder für den Betrieb montiert ist, etwa um 10°, 15° oder 20°, je nach der erreichbaren radialen Erfassungsreichweite. Dadurch wird eine optimale Ausrichtung des zweiten IR-Sensors erreicht, die das Potential der verbesserten radialen Erfassungsreichweite optimal ausschöpft.

Die vorliegende Erfindung wird im Folgenden mit Bezug auf die Figuren näher erläutert. Die Erfindung ist dabei aber nur durch die Ansprüche definiert und soll durch die folgende Beschreibung beispielhafter Ausführungsformen nicht eingeschränkt werden. Es zeigt:
- **Fig. 1**: eine schematische Darstellung eines optischen Elements;
- **Fig. 2**: eine schematische Darstellung eines weiteren optischen Elements;
- **Fig. 3**: eine weitere schematische Darstellung des optischen Elements aus Fig. 2; und
- **Fig. 4**: einen weitere schematische Darstellung des optischen Elements aus Fig. 2.

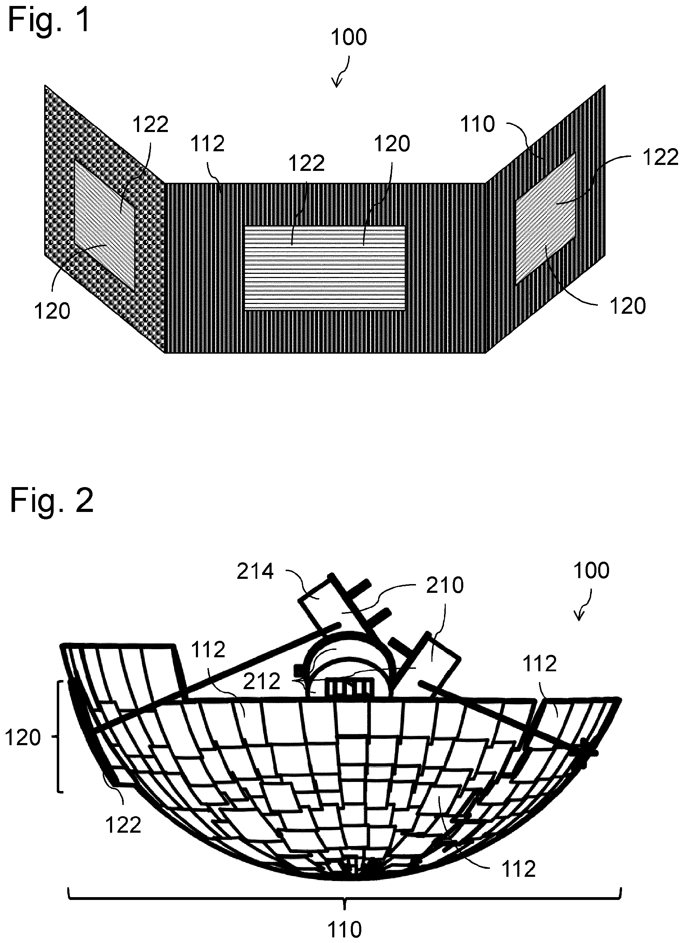

Die Fig. 1 zeigt ein optisches Element 100, das geeignet ist, darauf eintreffende Infrarot(IR)-Strahlung auf hinter dem optischen Element 100 liegende IR-Sensoren zu leiten bzw. zu bündeln. Das optische Element 100 ist hierbei aus einem Material ausgebildet, das für IR-Strahlung durchlässig ist, aber diese in ausreichender Weise bricht, um eine Ablenkung der IR-Strahlung zu ermöglichen. Als Material können hierbei sämtliche aus dem Stand der Technik bekannten Materialien verwendet werden. Vorzugsweise ist das optische Element aus HDPE (High Density Polyethylen) hergestellt.

Das optische Element 100 weist hierbei einen ersten Bereich 110 und zumindest einen zweiten Bereich 120 auf, in denen das optische Element 100 unterschiedliche Beugungseigenschaften hat. Der eine oder die mehreren zweiten Bereiche 120 sind hierbei in den ersten Bereich 110 eingebettet, sie sind also ganz oder teilweise von dem ersten Bereich 110 umschlossen.

Im ersten Bereich 110 setzt sich das optische Element 100 aus einer Vielzahl von ersten Linsen 112 zusammen, wohingegen in jedem der zweiten Bereiche 120 zumindest eine zweite Linse 122 angeordnet ist. Die ersten Linsen 112 weisen hierbei eine Apertur auf, die in einem ersten Aperturbereich liegt, und haben eine Brennweite, die in einem ersten Brennweitenbereich liegt. Die Aperturen der ersten Linsen 112 können z.B. im Bereich von 3 mm bis 10 mm liegen. Die Brennweiten der ersten Linsen 112 können z.B. im Bereich von 15 mm bis 25 mm liegen. Die zweiten Linsen 122 haben eine Apertur, die größer ist, als die Aperturen der ersten Linsen 112 und/oder eine Brennweite, die größer ist, als die Brennweiten der ersten Linsen 112. Die Apertur der zweiten Linsen 122 kann z.B. im Bereich von 10 mm bis 30 mm liegen. Die Brennweite der zweiten Linsen 122 kann z.B. im Bereich von 25 mm bis 35 mm liegen.

Eine größere Apertur erlaubt es, mehr IR-Strahlung durch die zweite Linse 122 aufzunehmen. Dadurch kann IR-Strahlung höherer Intensität auf einen hinter der zweiten Linse 122 angeordneten IR-Sensor geleitet werden. Dies erlaubt es wiederum, Intensitätsschwankungen, die bei einer radialen Annäherung auftreten, auch bei weiterer Entfernung wahrzunehmen. Durch die zweiten Linsen 122 durchtretende IR-Strahlung erlaubt es also, einen dahinterliegenden IR-Sensor mit einer im Vergleich zu den ersten Linsen 112 vergrößerten radialen Erfassungsreichweite zu betreiben.

Zusätzlich ist auch die Brennweite der zweiten Linse(n) 122 gegenüber den ersten Linsen 112 vergrößert. Durch eine größere Brennweite werden IR-Strahlung aussendenden Orte mit erhöhter Auflösung auf einen dahinterliegenden IR-Sensor abgebildet. Der IR-Sensor kann daher räumliche Temperaturunterschiede feinteiliger wahrnehmen. Dies erlaubt es, die Silhouette einer sich radial nähernden Person bereits in größerer Entfernung besser aufzulösen. Bewegungen der Gliedmaßen oder eine Vergrößerung der Silhouette können dadurch bereits in größerer Entfernung erkannt werden. Auch dies vergrößert im Vergleich zu den ersten Linsen 112 die radiale Erfassungsreichweite eines hinter der zweiten Linse 122 liegenden IR-Sensors.

Ein optisches Element 100 wie es oben beschrieben wurde, eignet sich daher, die radiale Erfassungsreichweite in bestimmten Winkelbereichen zu erhöhen. Sie kann z.B. an die tangentiale Erfassungsreichweite angeglichen werden, die dem durch den ersten Bereich 110 bzw. die ersten Linsen 112 definierten Hauptteil des optischen Elements 100 entspricht. Dadurch kann in bestimmten Bereichen eine für beide Detektionsarten annähernd gleiche Erfassungsreichweite erzielt werden. Dies vereinfacht den Aufbau eines das optische Element 100 verwendenden Bewegungsmelders und die Einstellung der Reichweite eines derartigen Bewegungsmelders.

Es versteht sich von selbst, dass die in der Fig. 1 gewählte Darstellung des optischen Elements 100 rein beispielhaft ist. Die Gesamtform des optischen Elements 100 kann beliebig ausgestaltet und den räumlichen Gegebenheiten in einem beliebigen Bewegungsmelder angeordnet sein. Das optische Element 100 kann z.B. als gebogener oder geknickter Streifen, als Teil einer Kugel- oder Ellipsenoberfläche (z.B. als Halb- oder Viertelsphäre) oder auch als Oberfläche eines unregelmäßigen Körpers ausgebildet sein.

Der Hauptbestandteil des optischen Elements 100 wird hierbei von dem ersten Bereich 110 konstituiert. In diesen sind je nach Bedarf als eines oder mehrere "Sichtfenster" mit erhöhter radialer Erfassungsreichweite ein bzw. mehrere zweite Bereiche 120 angeordnet. Die zweiten Linsen 122 können hierbei insbesondere als Fresnel-Linsen ausgebildet sein, während die ersten Linsen 112 als sphärische Linsen z.B. in einem Multilinsenarray angeordnet sind.

Eine weitere mögliche Ausgestaltung eines optischen Elements 100 ist zusammen mit innerhalb des optischen Elements 100 angeordneten IR-Sensoren 210 in den Fig. 2 bis 4 dargestellt. Das optische Element 100 und die darin angeordneten IR-Sensoren 210 bilden hierbei die Grundkomponenten einer Vorrichtung zur Erfassung von Bewegungen, d.h. eines Bewegungsmelders. Der Kürze der Beschreibung halber und da die weiteren Komponenten eines derartigen Bewegungsmelders (wie z.B. die Verkabelung, eine Steuereinheit oder dergleichen) einem Fachmann bekannt sind, wird auf deren Beschreibung im Folgenden verzichtet. Ausschlaggebend ist, dass durch das optische Element 100 auf die IR-Sensoren 210 einfallende IR-Strahlung detektiert und dahingehend ausgewertet werden kann, ob eine Bewegung stattgefunden hat. Bei detektierter Bewegung aktiviert der Bewegungsmelder einen vorgegebenen Prozess, wie z.B. das Einschalten einer Leuchte, das Öffnen einer Tür oder eines Tors, das Herbeirufen eines Aufzugs und dergleichen.

Wie in den Fig. 2 bis 4 dargestellt, weist das optische Element 100 einen ersten Bereich 110 auf, der nahezu das gesamte optische Element 100 in Form einer Teilsphäre konstituiert. In dem ersten Bereich 110 ist eine Mehrzahl von ersten Linsen 112 angeordnet, die in den Fig. 2 bis 4 nur schematisch durch überlappende Vielecke dargestellt sind. Die Größe und Anordnung der Vielecke korreliert hierbei mit der Position und der Apertur der ersten Linsen 112. Die ersten Linsen 112 können z.B. als sphärische Linsen eines Multilinsenarrays ausgestaltet sein.

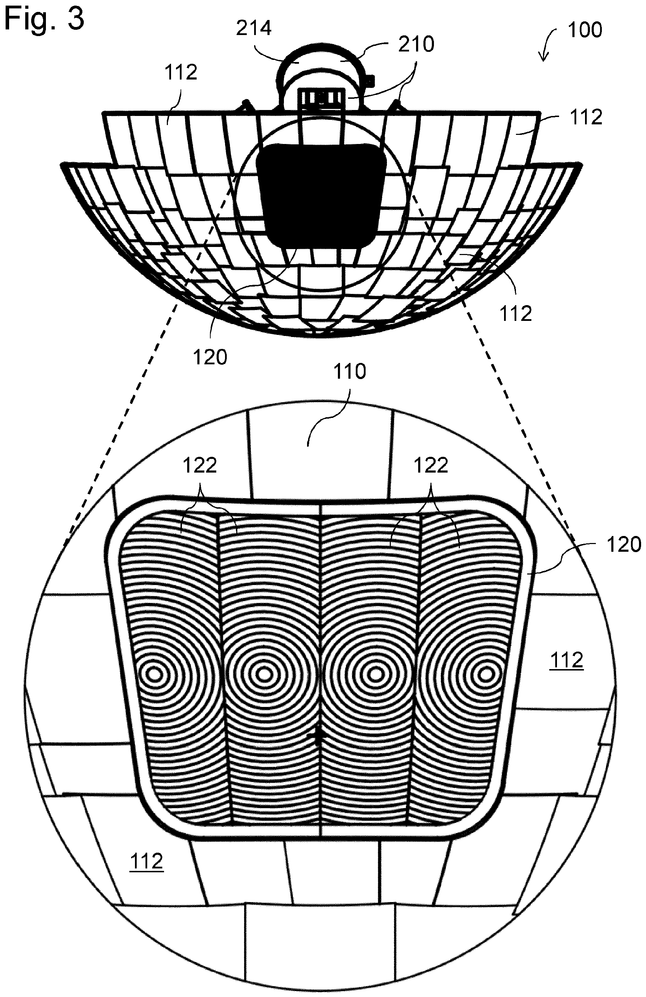

In den ersten Bereich 110 eingelassen ist ein zweiter Bereich 120, mit einer Mehrzahl von Fresnel-Linsen (zweiten Linsen 122), wie beispielsweise im Vergrößerungsausschnitt der Fig. 3 gezeigt. Die zweiten Linsen 122 weisen eine gegenüber den ersten Linsen 112 vergrößerte Apertur mit den daraus folgenden positiven Effekten auf. Die Apertur (oder die Fläche) der zweiten Linsen 122 kann das 2- bis 5-fache der Apertur (oder Fläche) der ersten Linsen 112 betragen.

Zusätzlich weisen die zweiten Linsen 122 eine größere Brennweite als die ersten Linsen 112 auf. Um dies zu ermöglichen, sind die zweiten Linsen 122 aus der von den ersten Linsen 112 definierten Oberfläche herausgerückt, wie dies z.B. in der Fig. 2 zu sehen ist. Wie ebenfalls in der Fig. 2 gezeigt, kann zum anderen aber auch die Position der IR-Sensoren 210 im Inneren des optischen Elements 100 angepasst werden.

Insbesondere kann dem zweiten Bereich 120 einer der IR-Sensoren 214 (zweiter IR-Sensor) zugeordnet sein, während die anderen IR-Sensoren 212 (erste IR-Sensoren) vermittelt über den ersten Bereich 110 den übrigen Überwachungsbereich abdecken. Der zweite IR-Sensor 214 ist dann gegenüber den ersten IR-Sensoren weiter von der durch die ersten Linsen 112 definierten Oberfläche beabstandet, z.B. wie in der Fig. 2 gezeigt, indem er weiter innen und weiter oben angeordnet ist als die ersten IR-Sensoren 212.

Durch das Herausrücken der zweiten Linsen 122 aus der durch die ersten Linsen 112 definierten Oberfläche und/oder durch das Einrücken des den zweiten Linsen 122 zugeordneten zweiten IR-Sensors 214 kann die Brennweite der zweiten Linsen 122 (bzw. des zweiten IR-Sensors 214) im Vergleich zur Brennweite der ersten Linsen 112 (bzw. der ersten IR-Sensoren 212) um 15% bis 65% der Brennweite der ersten Linsen vergrößert werden. Die Brennweite der ersten Linsen 112 kann z.B. zwischen 15 mm und 25 mm liegen, während die Brennweite der zweiten Linsen 122 z.B. zwischen 25 mm und 35 mm liegen kann.

Durch die vergrößerte Brennweite ergibt sich die oben beschriebene bessere Auflösung für IR-Signale, die durch die zweiten Linsen 122 auf den zweiten IR-Sensor 214 geleitet werden, und die daraus resultierende Vergrößerung der radialen Erfassungsreichweite.

Wie in der Fig. 3 beispielhaft gezeigt ist, kann der zweite Bereich 120 in annähernder Rechtecksform ausgebildet sein, d.h. der zweite Bereich 120 weist die Konturen eines - gegebenenfalls zum Trapez verjüngten - Rechtecks auf, das wie in der Fig. 3 gezeigt auch abgerundete Ecken aufweisen kann. Auf diese Weise ist es möglich, mit bloßem Auge den Bereich mit der vergrößerten radialen Erfassungsreichweite zu erkennen. Dies ermöglicht es, einen das optische Element 100 aufweisenden Bewegungsmelder in einfacher Weise so auszurichten, dass die maximale radiale Erfassungsreichweite in Überwachungsgebieten erzielt wird, die dafür von besonderem Interesse sind, also z.B. in Richtung von Zufahrten, Durchgängen oder dergleichen.

Der von dem zweiten IR-Sensor 214 durch die zweiten Linsen 122 wahrnehmbare Überwachungsbereich entspricht dann einem Raumwinkel, der z.B. einem Pyramidenstumpf mit viereckiger Grundfläche und zwei Öffnungswinkel von 20°, 30°, 40° oder 50° in horizontaler und vertikaler Richtung entspricht.

Der zweite IR-Sensor 214 ist vorzugsweise derart ausgerichtet, dass seine zentrale Sichtachse die Mitte des zweiten Bereichs 120 durchstößt. Wie in der Fig. 2 gezeigt, können alle IR-Sensoren 210 und insbesondere der zweite IR-Sensor 214 eine schräg nach unten geneigte Sichtachse aufweisen, z.B. mit einem Winkel zur Horizontalen zwischen 10° und 45°, wie etwa 20°, die es erlaubt, bei einer Installation des Bewegungsmelders in einer Höhe zwischen 1,50 m und 3 m Bodennahe Objekte bei Annäherung an den Bewegungsmelder zu detektieren.

Der zweite IR-Sensor 214 wird also bezüglich eines über die Positionierung des zweiten Bereichs gut einstellbaren Überwachungsbereichs mit einer erhöhten radialen Erfassungsreichweite ausgestattet. Außerhalb diese Überwachungsbereichs, d.h. in dem Bereich, in dem der zweite IR-Sensor 214 bzw. die ersten IR-Sensoren 212 die IR-Strahlung über die ersten Linsen 112 zugeleitet bekommen, ist die radiale Erfassungsreichweite geringer. Hier ist aber eher mit tangentialen Bewegungen zu rechnen, für die eine in etwa gleich große Erfassungsreichweite auch mit den ersten Linsen 112 erreicht werden kann.

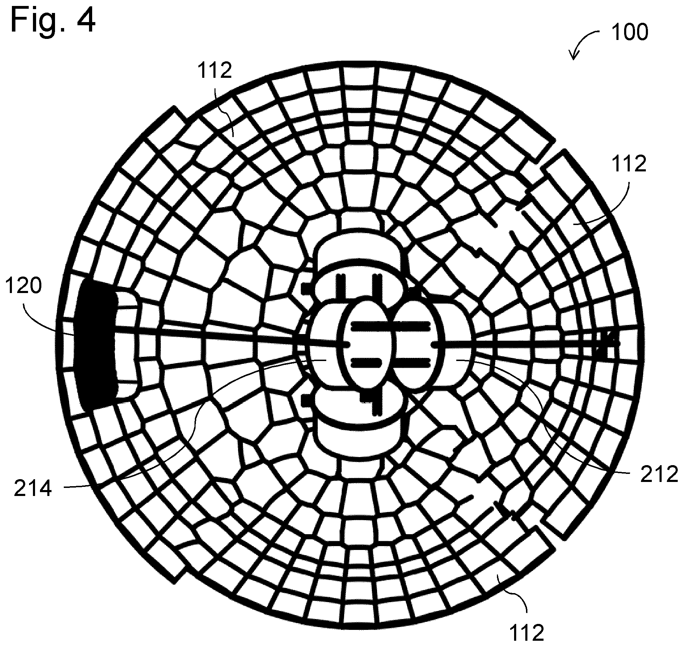

Wie in der Fig. 4 am besten gezeigt, können die IR-Sensoren 210 derart ausgerichtet sein, dass sie in der Horizontalebene zusammen den gesamten Winkelbereich von 0° bis 360° abbilden. Im Beispiel der Fig. 2 bis 4 sind vier IR-Sensoren 210 vorhanden, die jeweils einen Bereich von etwa 90° abdecken. Diese Erfassungsbereiche können sich an ihren Rändern überlappen, um die Detektionssicherheit und Auflösung in den Überlappbereichen zu verbessern. Dann deckt jeder IR-Sensor 210 einen Winkelbereich von mehr als 90° ab z.B. einen Winkelbereich von 92° bis 125°. Durch die Neigung der IR-Sensoren 210 kann zudem auch eine Erfassung von nahezu horizontal bis vertikal erreicht werden. Die komplette Sensoranordnung kann also geeignet sein, die gesamte untere Hemisphäre zu überwachen.

Es versteht sich von selbst, dass die Anzahl der IR-Sensoren 210 nicht auf vier beschränkt ist. Es kann jede beliebige Anzahl von IR-Sensoren 210 verwendet werden, je nach Ausgestaltung und Funktionsweise des Bewegungsmelders. Ebenso ist die Form des optischen Elements 100 nicht auf die in den Fig. 2 bis 4 gezeigt Form beschränkt. Sie wird vielmehr an die Detektionsrichtungen und die gewünschten Erfassungsbereiche der IR-Sensoren 210 angepasst werden, um eine optimale Signalübertragung zu gewährleisten.

Ausschlaggebend ist hierbei, dass das optische Element 100 zumindest einen Bereich aufweist, der zumindest einem IR-Sensor 214 zumindest eine zweite Linse 122 zuordnet, mit der eine größere radiale Erfassungsreichweite erreicht werden kann als mit den ansonsten im optischen Element 100 verwendeten ersten Linsen 112.

## Patentansprüche

1. Optisches Element (100), das geeignet ist, Infrarotstrahlung auf einen Infrarotsensor (210) zur Erfassung von Bewegungen zu leiten; wobei
das optische Element (100) einen ersten Bereich (110) aufweist, in dem eine Mehrzahl von ersten Linsen (112) mit einer Apertur aus einem ersten Aperturbereich und einer Brennweite aus einem ersten Brennweitenbereich angeordnet ist, und
das optische Element (100) einen zweiten Bereich (120) aufweist, der innerhalb des ersten Bereichs (110) liegt und zumindest eine zweite Linse (122) mit einer Apertur aus einem zweiten Aperturbereich mit Werten, die größer sind als die Werte des ersten Aperturbereichs, und mit einer Brennweite aus einem zweiten Brennweitenbereich mit Werten aufweist, die größer sind als die Werte des ersten Brennweitenbereichs;
**dadurch gekennzeichnet, dass**
die zumindest eine zweite Linse (122) in Einfallsrichtung der auf den Infrarotsensor (210) zu leitenden Infrarotstrahlung aus einer durch die ersten Linsen (122) definierten Oberfläche des optischen Elementes (100) herausragt.

2. Optisches Element (100) nach Anspruch 1, wobei
die zumindest eine zweite Linse (122) eine Fresnel-Linse ist und die ersten Linsen (112) sphärische Linsen sind.

3. Optisches Element (100) nach einem der Ansprüche 1 bis 2, wobei
das optische Element (100) die Form einer Teilsphäre aufweist; und
der zweite Bereich (120) eine rechteckige Fläche aufweist.

4. Vorrichtung zur Erfassung von Bewegungen, aufweisend:
das optische Element (100) nach einem der Ansprüche 1 bis 3 und
zumindest einen Infrarotsensor (210) zur Erfassung von Bewegungen, auf den das optische Element (100) Infrarotstrahlung leitet.

5. Vorrichtung nach Anspruch 4, wobei
die Vorrichtung eine Mehrzahl von Infrarotsensoren (210) zur Erfassung von Bewegungen aufweist;
die Mehrzahl von Infrarotsensoren (210) erste Infrarotsensoren (212) aufweist, auf die Infrarotstrahlung nur durch einen Teil der ersten Linsen (112) geleitet wird; und
die Mehrzahl von Infrarotsensoren (210) zumindest einen zweiten Infrarotsensor (214) aufweist, auf den Infrarotstrahlung durch einen Teil der ersten Linsen (112) und die zumindest eine zweite Linse (122) geleitet wird.

6. Vorrichtung nach Anspruch 5, wobei
der minimale Abstand des zumindest einen zweiten Infrarotsensors (214) von der zumindest einen zweiten Linse (122) größer ist als minimale Abstände der ersten Infrarotsensoren (212) zu den ersten Linsen (112).

7. Vorrichtung nach einem der Ansprüche 5 oder 6, wobei
wenn eine zentrale Sichtlinie des zumindest einen zweiten Infrarotsensors (214) einen Winkel von 0° definiert, ein Erfassungsbereich des zumindest einen zweiten Infrarotsensors (214) innerhalb eines Winkelbereich von -20° bis +20° liegt; und
die ersten Infrarotsensoren (212) Erfassungsbereiche aufweisen, die zumindest teilweise außerhalb des Erfassungsbereichs des zumindest einen zweiten Infrarotsensors (214) liegen.

8. Vorrichtung nach einem der Ansprüche 5 bis 7, wobei
der zumindest eine zweite Infrarotsensor (214) bei bestimmungsgemäßer Montage der Vorrichtung einen schräg nach unten gerichteten Blickwinkel hat.

## Claims

1. An optical element (100) adapted to direct infrared radiation onto an infrared sensor (210) for detecting movement; wherein
the optical element (100) comprises a first region (110) in which a plurality of first lenses (112) is arranged, each having an aperture within a first aperture range and a focal length within a first focal length range, and
the optical element (100) comprises a second region (120) situated within the first region (110) and comprises at least one second lens (122) having an aperture from a second aperture range with values greater than those of the first aperture range, and a focal length from a second focal length range with values greater than those of the first focal length range;
**characterised in that**
the at least one second lens (122) protrudes , from a surface of the optical element (100) defined by the first lenses (122), in the direction of incidence of the infrared radiation to be directed towards the infrared sensor (210).

2. The optical element (100) according to claim 1, wherein
the at least one second lens (122) is a Fresnel lens and the first lenses (112) are spherical lenses.

3. The optical element (100) according to any one of claims 1 to 2, wherein
the optical element (100) has the shape of a partial sphere; and
the second region (120) has a rectangular area.

4. A motion detection device, comprising:
the optical element (100) according to any one of claims 1 to 3 and
at least one infrared sensor (210) for detecting movement, onto which the optical element (100) directs infrared radiation.

5. The device according to claim 4, wherein
the device comprises a plurality of infrared sensors (210) for detecting movement;
the plurality of infrared sensors (210) comprises first infrared sensors (212) onto which infrared radiation is directed only through a portion of the first lenses (112); and
the plurality of infrared sensors (210) comprises at least one second infrared sensor (214) onto which infrared radiation is directed through a portion of the first lenses (112) and the at least one second lens (122).

6. The device according to claim 5, wherein
the minimum distance between the at least one second infrared sensor (214) and the at least one second lens (122) is greater than the minimum distances between the first infrared sensors (212) and the first lenses (112).

7. The device according to any one of claims 5 or 6, wherein
when a central line of sight of the at least one second infrared sensor (214) defines an angle of 0°, a detection range of the at least one second infrared sensor (214) lies within an angular range of -20° to +20°; and
the first infrared sensors (212) have detection ranges that lie at least partially outside the detection range of the at least one second infrared sensor (214).

8. The device according to any one of claims 5 to 7, wherein the at least one second infrared sensor (214) has a diagonally downward-angled field of view when the device is installed as intended.

## Revendications

1. Élément optique (100) apte à diriger un rayonnement infrarouge vers un capteur infrarouge (210) destiné à détecter des mouvements ; dans lequel
l'élément optique (100) comporte une première zone (110) dans laquelle sont disposées une pluralité de premières lentilles (112) présentant une ouverture appartenant à une première plage d'ouvertures et une distance focale appartenant à une première plage de distances focales, et
l'élément optique (100) comporte une deuxième zone (120) située à l'intérieur de la première zone (110) et comportant au moins une deuxième lentille (122) présentant une ouverture appartenant à une deuxième plage d'ouvertures dont les valeurs sont supérieures à celles de la première plage d'ouvertures, et une distance focale appartenant à une deuxième plage de distances focales dont les valeurs sont supérieures à celles de la première plage de distances focales ;
**caractérisé en ce que**
la au moins une deuxième lentille (122) fait saillie, dans la direction d'incidence du rayonnement infrarouge à diriger vers le capteur infrarouge (210), hors d'une surface de l'élément optique (100) définie par les premières lentilles (122).

2. Élément optique (100) selon la revendication 1, dans lequel
ladite au moins une deuxième lentille (122) est une lentille de Fresnel et les premières lentilles (112) sont des lentilles sphériques.

3. Élément optique (100) selon l'une des revendications 1 à 2, dans lequel
l'élément optique (100) a la forme d'une demi-sphère ; et
la deuxième zone (120) présente une surface rectangulaire.

4. Dispositif de détection de mouvements, comprenant :
l'élément optique (100) selon l'une des revendications 1 à 3 et
au moins un capteur infrarouge (210) destiné à détecter des mouvements, vers lequel l'élément optique (100) dirige un faisceau infrarouge.

5. Dispositif selon la revendication 4, dans lequel
le dispositif comprend une pluralité de capteurs infrarouges (210) destinés à détecter des mouvements ;
la pluralité de capteurs infrarouges (210) comprend des premiers capteurs infrarouges (212) vers lesquels le rayonnement infrarouge n'est dirigé que par une partie des premières lentilles (112) ; et
la pluralité de capteurs infrarouges (210) comprend au moins un deuxième capteur infrarouge (214) vers lequel le rayonnement infrarouge est dirigé par une partie des premières lentilles (112) et par ladite au moins une deuxième lentille (122).

6. Dispositif selon la revendication 5, dans lequel
la distance minimale entre ledit au moins un deuxième capteur infrarouge (214) et ladite au moins une deuxième lentille (122) est supérieure aux distances minimales entre les premiers capteurs infrarouges (212) et les premières lentilles (112).

7. Dispositif selon l'une des revendications 5 ou 6, dans lequel
lorsqu'une ligne de visée centrale dudit au moins un deuxième capteur infrarouge (214) définit un angle de 0°, une zone de détection dudit au moins un deuxième capteur infrarouge (214) se situe dans une plage angulaire comprise entre -20° et +20° ; et
les premiers capteurs infrarouges (212) présentent des zones de détection qui se situent au moins en partie en dehors de la zone de détection dudit au moins un deuxième capteur infrarouge (214).

8. Dispositif selon l'une des revendications 5 à 7, dans lequel
le au moins un deuxième capteur infrarouge (214) présente, lorsque le dispositif est monté conformément à sa destination, un angle de vision orienté obliquement vers le bas.
